# EUROPÄISCHE PATENTSCHRIFT

(11) **EP 0 504 923 B1**
(45) Veröffentlichungstag und Bekanntmachung des Hinweises auf die Patenterteilung: **11.09.1996**
(21) Anmeldenummer: 92104889.8
(22) Anmeldetag: 20.03.1992
(51) Int. Cl.: C09B 67/00, C09B 19/02

(54) **Verfahren zur Herstellung von Pigmentzubereitungen auf Basis von C.I. Pigment Violet 23**
Process for the preparation of pigment preparations on the basis of C.I. pigment violet 23
Procédé pour la préparation des préparations de pigment à base de C.I. pigment violet 23

(30) Priorität: 22.03.1991 DE 4109488
(43) Veröffentlichungstag der Anmeldung: 23.09.1992
(73) Patentinhaber: HOECHST AKTIENGESELLSCHAFT, 65926 Frankfurt am Main (DE)
(72) Erfinder: Dietz, Erwin, Dr., W-6233 Kelkheim (Taunus) (DE); Urban, Manfred, W-6200 Wiesbaden (DE)

(56) Entgegenhaltungen:
- EP-A- 0 321 919
- EP-A- 0 395 988
- GB-A- 2 071 683
- PATENT ABSTRACTS OF JAPAN vol. 6, no. 54 (C-97)(932) 9. April 1982
- PATENT ABSTRACTS OF JAPAN vol. 11, no. 96 (C-412)(2543) 26. März 1987
- PATENT ABSTRACTS OF JAPAN vol. 13, no. 589 (C-670)(3937) 25. Dezember 1989
- PATENT ABSTRACTS OF JAPAN vol. 13, no. 589 (C-670)(3937) 25. Dezember 1989

## Beschreibung

Gegenstand der vorliegenden Erfindung ist ein besonders umweltfreundliches und wirtschaftliches Verfahren zur Herstellung von Pigmentzubereitungen, bestehend aus einer Kombination von C.I. Pigment Violet 23 (No. 51 319) und Pigmentdispergatoren auf Basis von Dioxazinverbindungen mit basischen Gruppen. Die so zugänglichen Verfahrenserzeugnisse dienen als Farbmittel zum Pigmentieren von hochmolekularen Materialien, insbesondere Lacken, Kunststoffen und Druckfarben; sie zeichnen sich durch ihre hervorragenden coloristischen und rheologischen Eigenschaften wie Dispergierbarkeit, Flockungsstabilität, Rheologie, Glanzverhalten und Farbstärke aus.

Für die Fabrikation von Pigmentzubereitungen unter der Mitverwendung von produktspezifischen Pigmentdispergatoren ist laut Stand der Technik bereits eine Reihe von Möglichkeiten bekannt geworden:
Entsprechend der offengelegten EP-PA 0 321 919 sind derartige Pigmentzubereitungen beispielsweise nach folgenden Verfahrensvarianten erhältlich:
Durch Zugabe der Pigmentdispergatoren bei
1. der Feinverteilung (Trockenmahlung) der hochkristallinen Rohpigmente,
2. dem Finish der durch Trockenmahlung hergestellten feinteiligen Präpigmente im wäßrigen oder einem lösemittelhaltigen System,
3. der Dispergierung der feinteiligen Pigmente im Anwendungsmedium oder in einem zusätzlichen Verarbeitungsschritt.

Während nun beim gerade besprochenen Schutzrecht den Maßnahmen zur Behandlung gemäß den Verfahrensvarianten 1 und 2 der Vorzug eingeräumt wird, empfiehlt die Vorschrift in der DE-OS 31 06 906 für dasselbe Vorhaben wiederum die Zugabe von Pigmentdispergatoren chemisch verwandten Typs bei der Dispergierung der feinteiligen Pigmente im Anwendungsmedium. Im Rahmen der zuletzt erwähnten Arbeitsweise wird allerdings in vielen Fällen das Optimum der gesuchten Eigenschaften nicht erreicht.
Der Einsatz von Pigmentdispergatoren im Verlauf der Feinverteilung der hochkristallinen Rohpigmente wird auch in der DE-OS 25 00 509 erläutert. Als solche Feinverteilungsverfahren sind hier die Salzvermahlung in Kugelmühlen oder Schwingmühlen und die Umfällung aus konzentrierter Schwefelsäure angegeben. Dabei fallen jedoch große Mengen von Salzen bzw. von verdünnter Schwefelsäure im Abwasser an, was die Wirtschaftlichkeit dieses Verfahrens stark einschränkt. Die DE-AS 29 05 114 beschreibt schließlich die Erzeugung von Pigmentzubereitungen durch Eintragen der Pigmentdispergatoren bei der Trockenmahlung in Kugelmühlen mit oder ohne Salzzusatz. Pigmentzubereitungen auf Basis von Dioxazinpigmenten werden hierbei nicht genannt.

Zur Feinverteilung von bei der Synthese hochkristallin anfallenden Dioxazin-Rohpigmenten haben für die Anwendung in der Praxis folgende mechanische Zerkleinerungsverfahren Verbreitung gefunden:
So geht beispielsweise aus der DE-PS 11 37 156 hervor, daß man derartige Rohpigmente durch Salzvermahlung mit 4 bis 10 Teilen Salz je Teil Rohpigment in einer Kugelmühle feinmahlen kann. Diese Technik ist aber relativ teuer und bringt darüber hinaus durch die im Zuge der Aufarbeitung als Rückstand zu beseitigenden großen Salzmengen eine hohe Abwasserbelastung mit sich. Davon abweichend schlägt die DE-PS 27 42 575 vor, die Trockenmahlung von hochkristallinen Dioxazin-Rohpigmenten in einer Schwingmühle durchzuführen und einen Lösemittelfinish der dabei erhaltenen feinteiligen Präpigmente anzuschließen. Wegen der beim Mahlen zwangsläufig anfallenden Stäube und der verursachten starken Lärmbelästigung wird in diesem Fall die Umwelt stark geschädigt. Außerdem müssen die heftigen Vibrationen von Schwingmühlen durch sehr aufwendige bauliche Maßnahmen gedämpft werden.
Noch anders als nach den beiden vorhergehenden Fällen wird in der DE-AS 20 43 820 zum Zwecke der Feinverteilung auf die alkalische Naßmahlung von kristallinen Rohpigmenten der Dioxazinreihe in Gegenwart einer wässrigen Base verwiesen. Als Mahlkörper für die Rührwerkskugelmühle sind Stahlkugeln von 1-3 mm Durchmesser vorgesehen. Weitere spezifische Angaben zur Mahlung werden in dem Schutzrecht nicht gemacht, auch keine über auf diesem Weg ggf. erhältliche Pigmentzubereitungen. Unseres Wissens genügen die nach diesem Verfahren hergestellten Pigmente jedoch nicht den heutigen Anforderungen an Kornfeinheit und den coloristischen Eigenschaften.

Wie aufgrund der durch die damit beschäftigten Fachkreise gesammelten Erfahrungen geschlossen werden kann, erscheint ganz allgemein der Zugabezeitpunkt der Pigmentdispergatoren von besonderer Wichtigkeit für das beabsichtigte Eigenschaftsprofil der auf die betreffende Weise hergestellten Pigmentzubereitungen. Soviel dürfte als technische Lehre zumindest feststehen, daß sich durch bloßes Mischen der Pigmentdispergatoren mit den Pigmenten bzw. allein durch die Trockenmahlung der hochkristallinen Rohpigmente in Gegenwart von Pigmentdispergatoren in den meisten Fällen noch nicht die optimalen Qualitätsmerkmale der so behandelten Pigmente realisieren lassen.
Ähnliche Vorbehalte bestehen hinsichtlich der Anwendung der bekannten Feinverteilungsverfahren, wo der Anfall großer Mengen verdünnter Säuren und Salze, die starke Staubentwicklung und die störenden Vibrationen im Falle der Trockenmahlung sowie eine schlechte Kombinierbarkeit der diesbezüglich diskutierten Arbeitsweisen als nachteilig empfunden wird.

Die Aufgabe für die vorliegende Erfindung kann demzufolge darin erblickt werden, die vom Stand der Technik her erkannten Unzulänglichkeiten der bisherigen Methoden zur Erzeugung von Pigmentzubereitungen auf dem Gebiet der Dioxazinverbindungen zu überwinden.

Es wurde nun gefunden, daß sich Pigmentzubereitungen auf Basis von C.I. Pigment Violet 23 mit hervorragenden coloristischen und rheologischen Eigenschaften auf einfache Weise erzeugen lassen, wenn man die beim Trocknen des von der Pigmentsynthese herstammenden feuchten Preßkuchens in grobkristallinem Zustand entstandenen Rohpigmente der oben näher bezeichneten Dioxazinverbindung in Gegenwart von ausgewählten Pigmentdispergatoren zunächst in einem flüssigen Medium auf einer Rührwerkskugelmühle bis zum Erreichen eines bestimmten minimalen Feinverteilungsgrades der resultierenden Pigmentteilchen naßvermahlt und die so erhaltene Mahlgutsuspension dann direkt, im Falle einer Zwischenisolierung nach deren Wiederaufnahme in einer Flüssigkeit, unter der Beteiligung von organischen Lösemitteln einer üblichen Finish-Behandlung bei erhöhter Temperatur aussetzt, wobei die Zugabe der Pigmentdispergatoren zu einem beliebigen Zeitpunkt im Verlauf der beiden zuvor definierten Behandlungsgänge erfolgen kann. Bei den nach dem beanspruchten Verfahren eingeschlagenen Maßnahmen zwecks Formulierung des Basispigments der Formel I werden Feinverteilung und Finish auf einfache und elegante Weise kombiniert.

Für die erfindungsgemäße Herstellung dieser Pigmentzubereitungen ist eine hohe Mahlwirkung erforderlich, die durch den Einsatz einer speziellen Ausführungsform der Rührwerkskugelmühle erreicht wird, in Verbindung mit der Einhaltung spezifizierter Mahl- und Finishbedingungen. Für eine Mahlung der gesuchten Effizienz sind geeignet Rührwerkskugelmühlen, ausgelegt zum diskontinuierlichen oder kontinuierlichen Arbeitsablauf, mit zylinderförmigem oder hohlzylinderförmigem Mahlraum in horizontaler oder vertikaler Bauweise, die mit einer spezifischen Leistungsdichte von über 2,5 kW pro Liter Mahlraum betrieben werden können und deren Rührwerksumfangsgeschwindigkeit über 12 m pro Sekunde beträgt. Die pro Zeiteinheit vom Rührwerk abgegebene Energie wird als Zerkleinerungsarbeit und als Reibungsenergie in Form von Wärme an das Mahlgut übertragen. Zur problemlosen Abführung dieser großen Wärmemenge muß durch konstruktive Vorkehrungen das Verhältnis von Mahlraum zur Mahlraumoberfläche (Kühlfläche) möglichst klein gehalten werden.
Als Mahlkörper dienen Kugeln aus Zirkoniumoxid, Zirkoniummischoxid, Aluminiumoxid oder Quarz vom Durchmesser ≤ 1 mm; zweckmäßig werden solche mit einem Durchmesser von 0,2 bis 1 mm, vorzugsweise 0,3 bis 0,5 mm verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen derselben weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Für die Mahlung werden verfahrensgemäß die bei der Synthese anfallenden hochkristallinen Rohpigmente mit einem Röntgenindex von > 90 eingesetzt, die nach dem Mahlvorgang als feinteilige Präpigmente oder derartiger Präpigmentzusammensetzungen mit einer Kristallinität entsprechend einem Röntgenindex von ≤ 9 vorliegen. Die Pigmentkonzentration im Mahlgut sollte bei ≤ 40 Gew.-% liegen, im allgemeinen 10 bis 35 Gew.-% betragen, vorzugsweise zwischen 10 und 20 Gew.-% sein. Die Mahlung wird in wässrigem, wässrig/organischem oder organischem Medium vom Lösemittel-Typ, vorzugsweise im alkalischen oder neutralen pH-Bereich durchgeführt. Das Mahlgut kann außer der flüssigen Phase und dem Rohpigment noch Pigmentdispergatoren, Tenside und andere Zuschlagstoffe aufweisen. Die Verweilzeit des Mahlguts in der Rührwerkskugelmühle liegt je nach geforderter Feinheit im allgemeinen zwischen 10 und 60 Minuten; sie beläuft sich zweckmäßig auf eine Dauer von 10 bis 45 Minuten, vorzugsweise 10 bis 30 Minuten. Die Mahlung wird bei Temperaturen im Bereich von 0° bis 100°C, zweckmäßig bei einer Temperatur zwischen 10° und 60°C, vorzugsweise bei 20° bis 50°C durchgeführt.

Als flüssiges Mahlmedium werden Wasser; mit Wasser mischbare C₁-C₄-Alkanole wie z. B. Methanol, Ethanol, n-Propanol, Isopropanol, n-Butanol, tert.-Butanol oder Isobutanol; cyclische Alkanole wie z. B. Cyclohexanol; C₁-C₆-Dialkylketone wie z. B. Aceton, Diethylketon, Methylisobutylketon oder Methylethylketon; Ether und Glykolether wie z. B. Methylglykol, Ethylglykol, Butylglykol, Ethyldiglykol oder Methoxybutanol; aliphatische Säureamide wie z. B. Formamid oder Dimethylformamid; cyclische Carbonsäureamide wie z.B. N-Methylpyrrolidon, Valero- und Caprolactam, heterocyclische Basen wie z. B. Pyridin, Morpholin oder Picolin; sowie Dimethylsulfoxid oder Mischungen dieser Lösungsmittel mit Wasser verwendet; insbesondere ist eine Lösung von Isobutanol in Wasser, z. B. 5 %iges Isobutanol bevorzugt.

Die Pigmentdispergatorzugabe kann auf einmal oder in mehreren Portionen erfolgen; sie kann vor, während oder nach der Mahlung vorgenommen werden. Der geeignetste Zeitpunkt muß zuvor durch orientierende Versuche ermittelt werden. Vorzugsweise wird die Zugabe der Pigmentdispergatoren während des letzten Drittels der Mahlung durchgeführt; sie kann in trockenem Zustand oder in Form eines feuchten Preßkuchens stattfinden.

Als Pigmentdispergatoren werden solche auf Basis der den Zubereitungen zugrundeliegenden Dioxazinverbindung mit der Formel I eingesetzt, 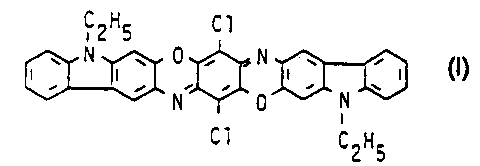 welche die allgemeine Formel II besitzen,

Q[-Y-X]ₘ (II)

in der
- Q: für einen m-wertigen Rest der Basisstruktur entsprechend Formel I steht,
- Y: eine brückenbildende Gruppierung aus der Reihe -CH₂-, -CHR¹-, -CR¹R²-, ggf. substituiertes Phenylen (besonders 1,4-Phenylen), -CO-, -SO₂- oder -NR³-, oder mehrfach aufeinanderfolgendes Alkylen oder eine sich ggf. wiederholende Kombination von mindestens zwei solcher Brückenglieder unterschiedlichen Typs bezeichnet, wie z. B. -SO₂-NR³-(CH₂)ₚ-, -CO-NR³-(CH₂)ₚ-, -CH₂-NR³-SO₂-(CH₂)ₙ-, -CH₂-NR³-CO-(CH₂)ₙ- oder -CH₂-NR³-CO-CH₂-NH-(CH₂)ₙ, in denen R¹ und R² gleiches oder unterschiedliches C₁-C₄-Alkyl und R³ Wasserstoff oder C₁-C₄-Alkyl sind, sowie n und p unabhängig voneinander jeweils Zahlenwerte von 1 bis 6 darstellen,
- X: den Rest eines über ein C-Atom an das Brückenglied Y gebundenen, aliphatischen oder aromatischen, fünf-, oder sechsgliedrigen heterocyclischen Systems darstellt mit jeweils 1 bis 3 ringangehörigen, gleichen oder unterschiedlichen Heteroatomen aus der Reihe Stickstoff, Sauerstoff oder Schwefel, das ggf. noch einen benzokondensierten Ring aufweist und durch C₁-C₄-Alkyl, C₂-C₄-Alkenyl, C₁-C₃-Hydroxyalkyl oder Phenyl substituiert sein kann, wie im Falle von heterocyclischen Fünfringen z. B. vom Typ Furan, Thiophen, Pyrrol, Pyrazol, Thiazol, Oxazol, Triazol und insbesondere Imidazol, bzw. im Falle von außerdem kondensierten Heterocyclen z. B. vom Typ Thionaphthen, Benzoxazol, Benzothiazol, Benzimidazol, Benzotriazol und insbesondere Indol,
oder einen über den Imidstickstoff an das Brückenglied Y gebundenen Phthalimido-Rest darstellt, der am benzoiden Ring bis maximal vierfach durch Chlor, Brom, Nitro, Carboxy, N-(C₁-C₅-Alkyl)-carbamoyl, N-Phenyl-carbamoyl oder Benzoylamino substituiert sein kann,
oder einen Rest mit der Struktur 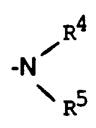 darstellt, in dem R⁴ und R⁵ einzeln für sich genommen sowie unabhängig voneinander jeweils Wasserstoff, ggf. substituiertes C₁-C₂₀-Alkyl oder C₂-C₂₀-Alkenyl, C₅-C₆-Cycloalkyl, ggf. substituiertes Phenyl, Benzyl oder Naphthyl sind,
oder in dem R⁴ und R⁵ gemeinsam sowie zusammen mit dem angrenzenden N-Atom ein aliphatisches oder aromatisches, fünf- oder sechsgliedriges heterocyclisches System mit jeweils 1 bis 3 ringangehörigen, gleichen oder unterschiedlichen Heteroatomen aus der Reihe Stickstoff, Sauerstoff oder Schwefel bilden, wie z. B. vom Typ Pyrrolin, Pyrrolidin, Piperidin, Morpholin und insbesondere Imidazol, und
- m: einen Zahlenwert zwischen 0,1 und 4 angibt, wobei im Falle mehrfachen Vorhandenseins (m > 1) der Bestandteile X und Y in den Dispergatoren der Formel II die Bedeutung der eben erwähnten Symbole nicht identisch sein muß. Vorzugsweise wird bei mehreren Resten der erläuterten Gattung bezüglich des Aufbauprinzips derselben aber Übereinstimmung bestehen.

Besonderes Interesse als Pigmentdispergator vom eingangs erläuterten Aufbauprinzip Q[-Y-X]ₘ (II) für die Durchführung des erfindungsgemäßen Verfahrens haben Dioxazinverbindungen erlangt, in denen
- Q: die weiter oben ausgewiesene Bedeutung zukommt,
- Y: eine der brückenbildenden Gruppierungen mit der Struktur

-CH₂-NH-CO-CH₂-NH-(CH₂)₂₋₃-

oder

-SO₂-NH-(CH₂)₂₋₃-,
- X: über den Imidstickstoff an das Brückenglied Y gebundenes Imidazolyl oder einen Rest mit der Struktur 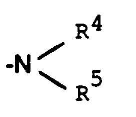 bezeichnet, wobei R⁴ und R⁵ gleiches oder unterschiedliches C₁-C₆-Alkyl darstellen, vorzugsweise sind R⁴ und R⁵ übereinstimmend, und
- m: für einen Zahlenwert von 0,5 bis 4 steht.

Als außerordentlich wertvoll für die Herstellung von Pigmentzubereitungen nach der Erfindung werden aus der Klasse von Pigmentdispergatoren vom Typ Q[-Y-X]ₘ (II) solche Dioxazinverbindungen eingestuft, die sich durch die Formel III 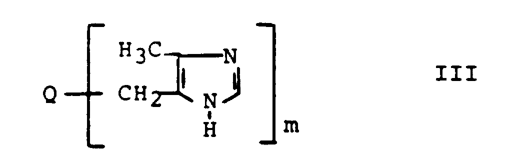 charakterisieren lassen, worin
- Q: die weiter oben ausgewiesene Bedeutung zukommt, und
- m: für einen Zahlenwert von 0,5 bis 4 steht.

Die zuvor erläuterten Varianten von Pigmentdispergatoren werden nach der Erfindung in Mengen von 0,1 bis 25 Gew.-%, zweckmäßig 1 bis 15 Gew.-%, vorzugsweise etwa 3 bis 10 Gew.-%, bezogen auf das Rohpigment mit der Basisstruktur entsprechend Formel I zugesetzt. Dies kann verfahrensgemäß schon beim Mahlvorgang oder erst im Zuge der anschließenden Finishoperation geschehen. Dafür lassen sich auch Gemische von unterschiedlich aufgebauten Pigmentdispergatoren der Formel II anwenden.

Die nach der Mahlung vorliegenden feinteiligen Präpigmente oder Präpigmentzusammensetzungen werden ggf. nach Zugabe der oben erwähnten Pigmentdispergatoren in wässriger Suspension oder besonders nach Beimischung von organischen Lösemitteln einer thermischen Behandlung (Lösemittelfinish) unterzogen.

Als Lösemittel für einen solchen Finish kommen beispielsweise in Frage: C₁-C₁₀-Alkanole wie z. B. Methanol, Ethanol, Propanol, n- oder i-Butanol; C₁-C₆-Dialkyl- oder cyclische Ketone wie z. B. Dimethylketon, Diethylketon, Methylisobutylketon, Methylethylketon oder Cyclohexanon; Ether und Glykolether wie z. B. der Monomethyl- oder Monoethylether des Ethylen- und Propylenglykols, Butylglykol, Ethyldiglykol oder Methoxybutanol; aromatische Kohlenwasserstoffe wie z. B. Toluol, Xylole oder Ethylbenzol; aromatische Chlorkohlenwasserstoffe wie z.B. Chlorbenzol, o-Dichlorbenzol, 1,2,4-Trichlorbenzol oder Brombenzol; substituierte Aromaten wie z. B. Nitrobenzol oder Phenol; aliphatische Carbonsäureamide wie z. B. Formamid oder Dimethylformamid; cyclische Carbonsäureamide wie z. B. N-Methylpyrrolidon; Carbonsäure- C₁-C₄-alkylester wie z. B. Ameisensäurebutylester, Essigsäureethylester oder Propionsäurepropylester; Benzoesäure-C₁-C₄-alkylester wie z. B. Benzoesäureethylester; heterocyclische Basen wie z. B. Pyridin, Morpholin oder Picolin; sowie Dimethylsulfoxid und Sulfolan. Bevorzugte organische Lösemittel sind in dieser Hinsicht Alkanole, wie z. B. Ethanol, Propanol, Butanole und Pentanole.

Die für die Durchführung des Lösemittelfinishs einzuschlagenden Bedingungen sind in hohem Maße von den angestrebten Eigenschaften der Pigmentzubereitung abhängig und werden jeweils daraufhin ausgerichtet. Normalerweise wird die Suspension der Präpigmentzusammensetzung in dem betreffenden Milieu bei einer Temperatur im Bereich zwischen 50° und 200°C, ggf. unter erhöhtem Druck, 1 Stunde bis zu 24 Stunden lang behandelt. Im allgemeinen wird dafür die nach der Naßmahlung erhaltene Suspension ohne Zwischenisolierung des Mahlguts eingesetzt. Die zugefügte Lösemittelmenge kann hierbei innerhalb weiter Grenzen schwanken. Bevorzugt verwendet man die gleiche bis zur 5fachen Gewichtsmenge an dem Lösemittel, bezogen auf das Gewicht der Präpigmentzusammensetzung. Die thermische Behandlung im wässrig-organischen Medium erfolgt zweckmäßig für die Dauer von 1 bis 6 Stunden bei 50° bis 150°C. Nach beendigtem Finish werden die dafür gebrauchten Lösemittel wieder zurückgewonnen und erneut eingesetzt. Die so erhaltenen Pigmentzubereitungen werden vorzugsweise aus schwach alkalischer Suspension isoliert.
Unter Ausnutzung der auf diese Weise zur Verfügung stehenden Abwandlungsmöglichkeiten lassen sich je nach Verwendungszweck die nach dem erfindungsgemäßen Verfahren anfallenden Präpigmentzusammensetzungen in eine deckendere oder transparentere Form überführen, was über das Lösevermögen des in Betracht gezogenen Lösemittels, dessen Konzentration, die Auswahl der Temperatur und die Dauer der Finishbehandlung gesteuert werden kann.

Die Herstellung von Pigmentzubereitungen auf Basis von C.I. Pigment Violet 23 nach dem beanspruchten Verfahren hat sich als besonders wirtschaftlich sowie umweltfreundlich erwiesen, weil sich einmal aus Anlaß der Feinverteilung des Rohpigments durch Naßmahlung keine Verschmutzung der Luft aufgrund von Staubentwicklung einstellt, und zum andern wegen des Einsatzes von bloß geringen Mengen an Chemikalien und Lösemitteln, welche anschließend weiterverarbeitet oder die wieder vollständig regeneriert werden können, keine Entsorgungsprobleme gegeben sind.

Die nach der vorliegenden Erfindung erhältlichen Pigmentzubereitungen zeichnen sich aus durch ihre hervorragenden coloristischen und rheologischen Eigenschaften insbesondere der Flockungsstabilität, Dispergierbarkeit, Rheologie, Glanzverhalten und Farbstärke.

Die erfindungsgemäß hergestellten Pigmentzubereitungen lassen sich zum Pigmentieren (Einfärben) von hochmolekularen organischen Materialien natürlicher oder synthetischer Herkunft einsetzen:
Hochmolekulare organische Materialien, die mit den genannten Pigmentzubereitungen coloriert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z. B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.
Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Toner oder in Form von Präparationen oder Dispersionen zu benutzen. Bezogen auf das zu pigmentierende hochmolekulare organische Material setzt man die vorliegenden Präparationen von Verbindungen der genannten Formel I in einer Menge von vorzugsweise 0,1 bis 10 Gew.-% ein. Besonders bevorzugte Lacksysteme sind in dieser Hinsicht Einbrennlacke aus der Klasse der Alkyd-/Melaminharz oder Acrylharz-Lacke sowie Zweikomponentenlacke auf Basis von mit Polyisocyanat vernetzbaren Acrylharzen. Von der Vielzahl der pigmentierbaren Druckfarben sind Druckfarben auf Basis Nitrocellulose besonders zu erwähnen.

Die erfindungsgemäß hergestellten Pigmentzubereitungen sind in vielen Anwendungsmedien leicht und bis zu hohen Feinheiten dispergierbar. Solche Dispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit ausgezeichneten Echtheitseigenschaften erzielen.

Zur Prüfung der Eigenschaften der nach der Erfindung erzeugten Pigmentzubereitungen auf dem Lacksektor wurden aus der Vielzahl der bekannten Systeme ein Alkyd-Melaminharz-Lack (AM6) auf Basis eines mittelöligen, nichttrocknenden Alkydharzes aus synthetischen Fettsäuren und Phthalsäureanhydrid und eines mit Butanol veretherten Melaminharzes und Anteilen eines nichttrocknenden Alkydharzes auf Basis von Ricinensäure (kurzölig) sowie ein Acrylharz-Einbrennlack auf Basis einer nicht-wässrigen Dispersion (TSA) ausgewählt. In den nachfolgenden Beispielen wird darauf unter der Bezeichnung AM6 bzw. TSA verwiesen.

Die Rheologie des Mahlguts nach der Dispergierung (Millbase-Rheologie) wird anhand der folgenden fünfstufigen Skala bewertet:

| | |
|---|---|
| 5 dünnflüssig | 2 leicht gestockt |
| 4 flüssig | 1 gestockt |
| 3 dickflüssig | |

Nach dem Verdünnen des Mahlguts auf die Pigmentendkonzentration wurde die Viskosität mit dem Viskospatel nach Rossmann, Typ 301 der Firma Erichsen beurteilt.
Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

In den nachstehenden Beispielen beziehen sich Teile jeweils auf Gewichtsteile und Prozente jeweils auf Gewichtsprozente der so beschriebenen Substanzen. Die zur Identifizierung benutzte Gattungsbezeichnung für die erfindungsgemäß als Farbmittel eingesetzte Dioxazinverbindung C.I. Pigment Violet 23 sowie die darauf gerichtete C.I.-Nummer 51319 sind dem COLOUR INDEX, 3. Auflage 1971, Band 4, entnommen.
Das laut den Beispielen als Ausgangsstoff eingesetzte grobkristalline Rohpigment ist nach der Vorschrift in BIOS Final Report 960, Seite 75 hergestellt worden und hatte in diesem Zustand einen Röntgenindex von 92 aufgewiesen. Sofern nicht anders angegeben ist, handelte es sich hierbei um das Rohpigment in salzfreier Form. Der Feinverteilungsgrad der Präpigmentzusammensetzungen wurde über das Röntgenbeugungsspektrum nach der in der DE-PS 27 42 575 angegebenen Methode bestimmt.

### Beispiel 1:

In eine Rührwerkskugelmühle vom Typ ®Drais PML (Hersteller: Draiswerke GmbH, Mannheim), die mit 336 g Zirkoniummischoxidperlen vom Durchmesser 0,3-0,4 mm als Mahlkörper gefüllt ist, werden nacheinander 85 g Isobutanol (5 %ig) und 15 g Rohpigment (Pigment Violet 23) eingetragen und darin mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach fügt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,10.
Zur Finishoperation wird der Filterrückstand in 120 ml Wasser aufgenommen, mit 45 g Isobutanol (100 %ig) versetzt und zunächst 24 Stunden bei 25°C nachgerührt. Nun bringt man das Gemisch zum Sieden, hält es unter weiterem Rühren 5 Stunden bei Siedetemperatur und destilliert sodann das Isobutanol durch Erhitzen bis auf 100°C am Übergang azeotrop ab. Nach dem Abkühlen auf 60°C wird der Destillationsrückstand mittels 10 %iger Natronlauge auf einen pH-Wert von 9 eingestellt, worauf man 1 Stunde bei 60°C nachrühren läßt. Das gefinishte Erzeugnis wird schließlich abgesaugt, durch Behandlung mit Wasser neutral gewaschen und bei 80°C getrocknet.
Man erhält 14,7 g einer Pigmentzubereitung, die bei der Ausprüfung im AM6-Lack farbstarke Lackierungen liefert. Dir Rheologie der Lackfarbe wird mit Note 5 eingestuft. Die Glanzmessung ergibt den Wert 85.

### Vergleich a:

Ohne Zusatz des Pigmentdispergators wird gemäß der Arbeitsweise von Beispiel 1 ein Pigment erhalten, das im AM6-Lack dann deckende und farbschwache Lackierungen liefert. Die Rheologie der Lackfarbe wird mit Note 4 eingestuft. Der Glanzwert beträgt 39.

### Vergleich b:

Wird das ohne den Pigmentdispergator, aber sonst wie in Beispiel 1 hergestellte Pigment hinterher mit 10 % des obigen Pigmentdispergators trocken gemischt, so erhält man eine Pigmentzubereitung, die im AM6-Lack dann deckende und farbschwache Lackierungen liefert. Die Rheologie der Lackfarbe wird mit Note 5 eingestuft. Der Glanzwert beträgt 85.

### Vergleich c:

Werden die Maßnahmen zur Feinverteilung des Rohpigments nach Beispiel 1 unter den in der DE-AS 20 43 820 beschriebenen Mahlbedingungen (alkalische Naßmahlung, Stahlkugeln vom Druchmesser 3 mm, Mahlzeit 1 Stunde) wiederholt, so wird nach der Aufarbeitung des Mahlguts ein sehr deckendes und farbschwaches Pigment erhalten.

### Beispiel 2:

Eine Rührwerkskugelmühle vom Typ Drais PML, die mit 336 g Zirkoniummischoxidperlen vom Durchmesser 0,3-0,4 mm gefüllt ist, wird nacheinander mit 75 ml Wasser, 15 g Rohpigment (Pigment Violet 23) und 10,1 g Pigmentdispergator der Formel III, worin m die Zahlt 1,5 ist, als 29,7 %igem wasserfeuchtem Preßkuchen beschickt. Dieses Gemisch wird nun mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 5,95.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.

Man erhält 17,2 g einer Pigmentzubereitung, die im AM6-Lack farbstarke Lackierungen liefert. Die Rheologie der Lackfarbe wird mit Note 5 eingestuft. Der Glanzwert beträgt 81.

### Beispiel 3:

In einem Rührgefäß werden 90 l Wasser vorgelegt und 30 kg Rohpigment (Pigment Violet 23) eingetragen. Die gebildete Suspension wird nun bei einem Durchsatz von 220 kg/h auf einer Rührwerkskugelmühle vom Typ Drais DCP-3, welche mit 26,5 kg Zirkoniummischoxidperlen vom Durchmesser 0,3-0,4 mm als Mahlkörper ausgerüstet ist und die mit einer Rührwerksumfangsgeschwindigkeit von 17,1 m/s sowie einer spezifischen Leistungsdichte von 3,3 kW pro Liter Mahlraum betrieben wird, während 2,5 Stunden im Kreislauf bei 50-60°C gemahlen. Hierbei wird die Viskosität der Mahlgutsuspension durch portionsweise Zugabe von 30 l Wasser konstant gehalten. Der Röntgenindex des Präpigments beträgt 1,20.
Zum Finish werden 1000 g der angefallenen Mahlgutsuspension in einem Rührgefäß vorgelegt, nacheinander mit 10 g Ameisensäure (98 %ig) und 600 g Isobutanol (100 %ig) versetzt und zunächst 22 Stunden bei 25 °C nachgerührt. Dann wird das Gemisch zum Sieden erhitzt und unter Rühren weitere 5 Stunden bei Siedetemperatur gehalten. Anschließend kühlt man auf 80°C ab und es werden jetzt 67,3 g Pigmentdispergator der Formel III, worin m die Zahl 1,5 ist, als 29,7 %iger wasserfeuchter Preßkuchen eingetragen, worauf man das Isobutanol durch Temperaturerhöhung bis auf 100°C am Übergang azeotrop abdestilliert. Der Rückstand wird auf 60°C abgekühlt, mittels 10 %iger Natronlauge auf einen pH-Wert von 9 eingestellt sowie 1 Stunde bei 60°C nachgerührt. Zuletzt wird das gefinishte Produkt abgesaugt, neutral gewaschen und bei 80°C getrocknet.

Man erhält 219,5 g einer Pigmentzubereitung, die im AM6-Lack farbstarke Lackierungen liefert. Die Rheologie der Lackfarbe wird mit Note 5 eingestuft. Der Glanzwert beträgt 82.

### Beispiel 4:

250 g der Mahlgutsuspension, hergestellt gemäß den Angaben in Beispiel 2, werden zum Finish in einem Rührautoklaven vorgelegt und nacheinander mit 2,5 g Ameisensäure (98 %ig) und 150 g Isobutanol (100 %ig) beschickt. Das Gemisch wird auf 125°C geheizt und 3 Stunden bei dieser Temperatur gerührt. Anschließend läßt man auf 80°C abgekühlen, trägt 16,8 g Pigmentdispergator der Formel III, worin m die Zahl 1,5 ist, als 29,7 %igen wasserfeuchten Preßkuchen ein und entfernt das Isobutanol durch azeotropes Abdestillieren bei Temperaturen bis zu 100°C am Übergang. Danach wird der Rückstand auf 60°C abgekühlt, mittels 10 %iger Natronlauge auf einen pH-Wert von 9 eingestellt sowie 1 Stunde bei 60°C nachgerührt. Das gefinishte Produkt wird abgesaugt, neutral gewaschen und bei 80°C getrocknet.
Man erhält 54,6 g einer Pigmentzubereitung, die im TSA-Lack farbstarke Lackierungen liefert. Die Rheologie der Lackfarbe wird mit Note 5 eingestuft. Der Glanzwert beträgt 81.

### Beispiel 5:

In eine Rührwerkskugelmühle vom Typ Drais PML, die mit 336 g Zirkoniummischoxidperlen vom Durchmesser 0,3-0,4 mm gefüllt ist, werden nacheinander 90 g Isobutanol (5 %ig) und 10 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Danach fügt man noch 3,4 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,90.
Der Filterrückstand wird zum Finish in 90 ml Wasser aufgenommen, mit 30 g Isobutanol (100 %ig) versetzt und zunächst 24 Stunden bei 25°C nachgerührt. Anschließend bringt man das Gemisch zum Sieden und hält es unter weiterem Rühren 5 Stunden bei Siedetemperatur, worauf man durch Erhitzen bis auf 100°C am Übergang das Isobutanol azeotrop abdestilliert. Nach dem Abkühlen auf 60°C wird der Destillationsrückstand mittels 10 %iger Natronlauge auf einen pH-Wert von 9 eingestellt sowie 1 Stunde bei 60°C nachgerührt. Das resultierende Produkt wird abgesaugt, neutral gewaschen und bei 80°C getrocknet.
Man erhält 10,4 g einer Pigmentzubereitung, die im AM6-Lack farbstarke Lackierungen liefert. Die Rheologie der Lackfarbe wird mit Note 5 eingestuft. Der Glanzwert beträgt 83.

### Beispiel 6:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 12,1 m/s sowie einer spezifischen Leistungsdichte von 2,6 kW pro Liter Mahlraum 25 Minuten lang bei 25°C gemahlen. Danach setzt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,50.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 14,8 g einer Pigmentzubereitung, die im AM6-Lack farbstarke Lackierungen liefert. Die Rheologie der Lackfarbe wird mit Note 5 eingestuft. Der Glanzwert beträgt 83.

### Beispiel 7:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 50°C gemahlen. Danach setzt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 7,45.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 13,8 g einer Pigmentzubereitung, die im AM6-Lack farbstarke Lackierungen liefert. Die Rheologie der Lackfarbe wird mit Note 5 eingestuft. Der Glanzwert beträgt 82.

### Beispiel 8:

In eine Rührwerkskugelmühle vom Typ Drais PML, die mit 227 g Quarzitperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,05. Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 15,9 g einer Pigmentzubereitung, die im AM6-Lack farbstarke Lackierungen liefert. Die Rheologie der Lackfarbe wird mit Note 5 eingestuft. Der Glanzwert beträgt 84.

### Beispiel 9:

In eine Rührwerkskugelmühle vom Typ Drais PML, die mit 336 g Zirkoniummischoxidperlen vom Durchmesser 0,6-1,0 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,00.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 15,7 g einer Pigmentzubereitung, die im AM6-Lack farbstarke Lackierungen liefert. Die Rheologie der Lackfarbe wird mit Note 5 eingestuft. Der Glanzwert beträgt 80.

### Beispiel 10:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 40 Minuten lang bei 25°C gemahlen. Danach setzt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 5,80.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 14,4 g einer Pigmentzubereitung, die im AM6-Lack farbstarke Lackierungen liefert. Die Rheologie der Lackfarbe wird mit Note 5 eingestuft. Der Glanzwert beträgt 83.

### Beispiel 11:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen und durch Zugabe von Ameisensäure (98 %ig) auf einen pH-Wert von 3 eingestellt. Diese Vorlage wird nun mit einer Rührwerksumfangsgeschwindigkeit von 15,6 m/s sowie einer spezifischen Leistungsdichte von 3,1 kw pro Liter Mahlraum 25 Minuten lang bei 25°C gemahlen. Danach fügt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörperwerden mit Wasser abgespült und die vereinigten Mahlgutsuspensionen abgesaugt. Der Röntgenindex der Präpigmentzusammensetzung beträgt 6,00.
Der Filterrückstand wird zum Finish in 120 ml Wasser aufgenommen, mit 45 g Isobutanol (100 %ig) versetzt, durch Zugabe von Ameisensäure (98 %ig) auf einen pH-Wert von 3 eingestellt und zunächst 24 Stunden bei 25°C nachgerührt. Anschließend bringt man das Gemisch zum Sieden und hält es unter weiterem Rühren 5 Stunden bei Siedetemperatur, worauf das Isobutanol durch Erhitzen bis auf 100°C am Übergang azeotrop abdestilliert wird. Nach dem Abkühlen auf 60°C stellt man im Destillationsrückstand mittels 10 %iger Natronlauge einen pH-Wert von 9 ein und läßt 1 Stunde bei 60°C nachrühren. Das gefinishte Produkt wird abgesaugt, neutral gewaschen und bei 80°C getrocknet.
Man erhält 15,3 g einer Pigmentzubereitung, die im AM6-Lack farbstarke Lackierungen liefert. Die Rheologie der Lackfarbe wird mit Note 4-5 eingestuft. Der Glanzwert beträgt 83.

### Beispiel 12:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig), 0,85 g Natriumhydroxid und 20,4 g Rohpigment (Pigment Violet 23) (73,4 %ig, mit 26,6 % Salz aus der Synthese) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 2,5 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,60.
Die Maßnahmen zum Finish durch Lösemittelbehandlung des Filterrückstandes sowie zur Isolierung des daraus resultierenden Erzeugnisses erfolgen auf dieselbe Art wie in Beispiel 11 erläutert ist.
Man erhält 15,0 g einer Pigmentzubereitung, die im Nitrocellulosetiefdruck farbstarke und hochzglänzende Drucke liefert. Nach dem Abrasionstest auf dem Abrasionstester AT 2 (Hersteller: Firma Schröder, Weinheim/Bergstr.) beträgt die Abnahme der Chromschicht 1,1 mg.

### Beispiel 13:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig), 0,85 g Natriumhydroxid und 20,4 g Rohpigment (Pigment Violet 23) (73,4 %ig, mit 26,6 % Salz aus der Synthese) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 5,1 g Pigmentdispergator der Formel III, worin m die Zahl 1,5 ist, als 29,7 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,70.
Die Maßnahmen zum Finish durch Lösemittelbehandlung des Filterrückstandes sowie zur Isolierung des daraus resultierenden Erzeugnisses erfolgen auf dieselbe Art wie in Beispiel 11 erläutert ist.
Man erhält 15,5 g einer Pigmentzubereitung, die im AM6-Lack sehr farbstarke Lackierungen liefert. Die Rheologie der Lackfarbe wird mit Note 5 eingestuft. Der Glanzwert beträgt 84.

### Beispiel 14:

In eine Rührwerkskugelmühle vom Typ Drais PML, die mit 336 g Zirkoniummischoxidperlen vom Durchmesser 0,3-0,4 mm gefüllt ist, werden nacheinander 85 ml Methanol und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 1,5 g Pigmentdispergator der Formel III, worin m die Zahl 1,5 ist, hinzu und führt die Naßmahlung weitere 5 Minuten unter den gleichen Bedingungen fort. Anschließend wird die Mahlgutsuspension von den Mahlkörpern abgesiebt, die Mahlkörper werden mit Methanol abgespült und die vereinigten Mahlgutsuspensionen abgesaugt. Der Röntgenindex der Präpigmentzusammensetzung beträgt 8,00. Der Filterrückstand wird zum Finish in 120 ml Methanol aufgenommen und zunächst 24 Stunden bei 25°C nachgerührt. Anschließend bringt man das Gemisch zum Sieden und hält es unter weiterem Rühren 5 Stunden bei Siedetemperatur, worauf 300 ml Wasser zugegeben werden und durch Erhitzen bis auf 100°C am Übergang das Methanol azeotrop abdestilliert wird. Nach dem Abkühlen auf 60°C stellt man im Destillationsrückstand mittels 10%iger Natronlauge einen pH-Wert von 9 ein und läßt 1 Stunde bei 60°C nachrühren. Das gefinishte Produkt wird abgesaugt, neutral gewaschen und bei 80°C getrocknet.
Man erhält 14,3 g einer Pigmentzubereitung, die im AM6-Lack farbstarke Lackierungen liefert. Die Rheologie der Lackfarbe wird mit Note 5 eingestuft. Der Glanzwert beträgt 84.

### Beispiel 15:

In eine Rührwerkskugelmühle vom Typ Drais PML, die mit 336 g Zirkoniummischoxidperlen vom Durchmesser 0,3-0,4 mm gefüllt ist, werden nacheinander 85 ml Aceton und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 1,5 g Pigmentdispergator der Formel III worin m die Zahl 1,5 ist, hinzu und führt die Naßmahlung weitere 5 Minuten unter den gleichen Bedingungen fort. Anschließend wird die Mahlgutsuspension von den Mahlkörpern abgesiebt und die Mahlkörper werden mit Aceton abgespült. Der Röntgenindex der Präpigmentzusammensetzung beträgt 8,95.
Die vereinigten Mahlgutsuspensionen werden zunächst 24 Stunden bei 25°C nachgerührt, anschließend durch Erhitzen zum Sieden gebracht und sodann 5 Stunden bei Siedetemperatur weitergerührt. Danach werden 300 ml Wasser zugegeben und aus diesem Gemisch wird das Aceton unter Temperaturerhöhung bis auf 100°C am Übergang azeotrop abdestilliert. Nach dem Abkühlen auf 60°C stellt man im Destillationsrückstand mittels 10%iger Natronlauge einen pH-Wert von 9 ein und läßt 1 Stunde bei 60°C nachrühren. Das gefinishte Produkt wird abgesaugt, neutral gewaschen und bei 80°C getrocknet.
Man erhält 15,0 g einer Pigmentzubereitung, die im AM6-Lack farbstarke Lackierungen liefert. Die Rheologie der Lackfarbe wird mit Note 5 eingestuft. Der Glanzwert beträgt 82.

### Beispiel 16:

In eine Rührwerkskugelmühle vom Typ Drais PML, die mit 336 g Zirkoniummischoxidperlen vom Durchmesser 0,3-0,4 mm gefüllt ist, werden nacheinander 85 ml Diethylenglykol (50 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 1,5 g Pigmentdispergator der Formel III, worin m die Zahl 1,5 ist, hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 7,50.
Der Filterrückstand wird zum Finish in 120 ml Diethylenglykol (80 %ig) aufgenommen und zunächst 24 Stunden bei 25 °C nachgerührt. Anschließend wird das Gemisch auf 100°C erhitzt und dann 5 Stunden bei 100°C weitergerührt. Nach dem Abkühlen auf 60°C stellt man darin mittels 10 %iger Natronlauge einen pH-Wert von 9 ein und läßt 1 Stunde bei 60°C nachrühren. Das gefinishte Produkt wird abgesaugt, neutral gewaschen und bei 80°C getrocknet.
Man erhält 14,8 g einer Pigmentzubereitung, die im AM6-Lack farbstarke Lackierungen liefert. Die Rheologie der Lackfarbe wird mit Note 5 eingestuft. Der Glanzwert beträgt 82.

### Beispiel 17:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 6,6 g Pigmentdispergator der allgemeinen Formel II, worin Y die -CH₂-Gruppe und X den Phthalimidorest bedeutet und m die Zahl 2 ist (hergestellt analog DE-AS 29 05 114), als 22,8 %igen wasserfeuchten Preßkuchen hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,40.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 13,9 g einer Pigmentzubereitung, die in PVC farbstarke Ausfärbungen liefert.

### Beispiel 18:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 5,1 g Pigmentdispergator der allgemeinen Formel II, worin Y die Gruppierung -SO₂-NH-(CH₂)₂- und X den Rest -N(CH₂-CH₃)₂ bedeutet und m die Zahl 2 ist (hergestellt entsprechend DE-OS 31 06 906), hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,20.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 15,1 g einer Pigmentzubereitung, die im AM6-Lack farbstarke Lackierungen liefert. Die Rheologie der Lackfarbe wird mit Note 4-5 eingestuft. Der Glanzwert beträgt 75.

### Beispiel 19:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch 1,5 g Pigmentdispergator der allgemeinen Formel II, worin Y die Gruppierung -CH₂-NH-CO-CH₂-NH-(CH₂)₃- und X den 1-Imidazolylrest bedeutet und m die Zahl 2,5 ist (hergestellt nach der DE-OS 25 00 509), hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,09.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 13,7 g einer Pigmentzubereitung, die im AM6-Lack farbstarke Lackierungen liefert. Die Rheologie der Lackfarbe wird mit Note 3-4 eingestuft. Der Glanzwert beträgt 72.

### Beispiel 20:

In eine Rührwerkskugelmühle vom Typ Drais PML, die mit 336 g Zirkoniummischoxidperlen vom Durchmesser 0,3-0,4 mm gefüllt ist, werden nacheinander 85 g Isobutanol (5 %ig) und 15 g Rohpigment (Pigment Violet 23) eingetragen. Diese Vorlage wird nun mit einer Rührwerksumfangsgeschwindigkeit von 15,6 m/s sowie einer spezifischen Leistungsdichte von 3,1 kW pro Liter Mahlraum 25 Minuten lang bei 25°C gemahlen. Danach setzt man noch ein Gemisch aus 0,75 g Pigmentdispergator der Formel III, worin m die Zahl 1,5 ist, und 0,75 g Pigmentdispergator der allgemeinen Formel II, worin Y die Gruppierung -SO₂-NH-(CH₂)₂- und X den Rest -N(CH₂-CH₃)₂ bedeutet und m die Zahl 2 ist (hergestellt entsprechend DE-OS 31 06 906), hinzu und führt die Naßmahlung weitere 5 Minuten unter den gleichen Bedingungen fort. Anschließend wird die Mahlgutsuspension von den Mahlkörpern abgesiebt, die Mahlkörper werden mit Wasser abgespült und die vereinigten Mahlgutsuspensionen abgesaugt. Der Röntgenindex der Präpigmentzusammensetzung beträgt 6,80.
Der Filterrückstand wird sodann zum Finish der Einwirkung von Lösemitteln entsprechend Beispiel 1 unterzogen und das gefinishte Erzeugnis daraufhin in der dort angegebenen Weise isoliert.
Man erhält 14,8 g einer Pigmentzubereitung, die im AM6-Lack farbstarke Lackierungen liefert. Die Rheologie der Lackfarbe wird mit Note 5 eingestuft. Der Glanzwert beträgt 79.

## Patentansprüche

1. Verfahren zur Herstellung von Pigmentzubereitungen auf Basis von C.I. Pigment Violet 23 (No. 51 319) der Formel I 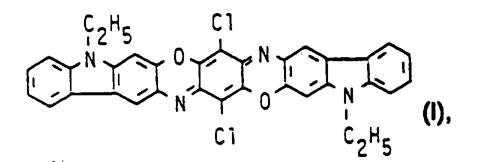 dadurch gekennzeichnet, daß man die in grobkristallinem Zustand vorliegenden Rohpigmente der obigen Dioxazinverbindung
in Gegenwart von Pigmentdispergatoren der allgemeinen Formel II
Q[- Y - X]ₘ (II),
in welcher
Q für einen m-wertigen Rest der Basisstruktur entsprechend Formel I steht,
Y eine brückenbildende Gruppierung aus der Reihe -CH₂-, -CHR¹-, -CR¹R²-, Phenylen, -CO-, -SO₂- oder -NR³-, oder mehrfach aufeinanderfolgendes Alkylen oder eine sich ggf. wiederholende Kombination von solchen Brückengliedern unterschiedlichen Typs bezeichnet, in denen R¹ und R² gleiches oder unterschiedliches C₁-C₄-Alkyl und R³ Wasserstoff oder C₁-C₄-Alkyl sind,
X den Rest eines über ein C-Atom an das Brückenglied Y gebundenen, aliphatischen oder aromatischen, fünf- oder sechsgliedrigen heterocyclischen Systems darstellt mit jeweils 1 bis 3 ringangehörigen, gleichen oder unterschiedlichen Heteroatomen aus der Reihe Stickstoff, Sauerstoff oder Schwefel, das ggf. noch einen benzokondensierten Ring aufweist und durch C₁-C₄-Alkyl, C₂-C₄-Alkenyl, C₁-C₃-Hydroxyalkyl oder Phenyl substituiert sein kann,
oder einen über den Imidstickstoff an das Brückenglied Y gebundenen Phthalimido-Rest darstellt, der am benzoiden Ring durch Chlor, Brom, Nitro, Carboxy, N-(C₁-C₅-Alkyl)-carbamoyl, N-Phenyl-carbamoyl oder Benzoylamino substituiert sein kann,
oder einen Rest mit der Struktur 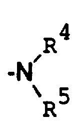 darstellt, in dem R⁴ und R⁵ einzeln für sich genommen sowie unabhängig voneinander jeweils Wasserstoff, ggf. substituiertes C₁-C₂₀-Alkyl oder C₂-C₂₀-Alkenyl, C₅-C₆-Cycloalkyl, ggf. substituiertes Phenyl, Benzyl oder Naphthyl sind,
oder in dem R⁴ und R⁵ gemeinsam sowie zusammen mit dem angrenzenden N-Atom ein aliphatisches oder aromatisches, fünf- oder sechsgliedriges heterocyclisches System mit jeweils 1 bis 3 ringangehörigen, gleichen oder unterschiedlichen Heteroatomen aus der Reihe Stickstoff, Sauerstoff oder Schwefel bilden, und
m einen Zahlenwert zwischen 0,1 und 4 angibt,
wobei im Falle mehrfachen Vorhandenseins (m > 1) der Bestandteile X und Y in den Dispergatoren der Formel II die Bedeutung der eben erwähnten Symbole nicht identisch sein muß,
deren Zugabe zu einem beliebigen Zeitpunkt im Verlauf der nachstehend näher definierten Kombination aus den beiden Behandlungsgängen Feinverteilung und Finish (ausgenommen sonstige Verarbeitungsschritte) erfolgen kann,
zunächst in einem inerten flüssigen Medium auf einer Rührwerkskugelmühle, die mit einer Leistungsdichte von > 2,5 kW pro Liter Mahlraum und einer Rührwerksumfangsgeschwindigkeit von > 12 m/s betrieben wird, unter der Einwirkung von Mahlkörpern vom Durchmesser ≤ 1 mm naßvermahlt, bis der Röntgenindex als Maßzahl für die Kristallinität der resultierenden Pigmentteilchen ≤ 9 beträgt,
diese Präpigmentzusammensetzung, in Form der so erhaltenen Mahlgutsuspension oder im Falle einer Zwischenisolierung nach vorheriger Wiederaufnahme in einer inerten ggf. organischen Flüssigkeit, dann einer Lösemittelfinish-Behandlung bei erhöhter Temperatur unterwirft und anschließend die fertiggestellte Pigmentzubereitung in herkömmlicher Weise isoliert.

2. Verfahren gemäß Anspruch 1, dadurch gekennzeichnet, daß man Mahlkörper vom Durchmesser 0,2 bis 1,0 mm, vorzugsweise 0,3 bis 0,5 mm einsetzt.

3. Verfahren gemäß Anspruch 1 oder 2, dadurch gekennzeichnet, daß die Pigmentkonzentration im Mahlgut bei ≤ 40 Gew.-% liegt.

4. Verfahren gemäß Anspruch 3, dadurch gekennzeichnet, daß die Pigmentkonzentration im Mahlgut 10 bis 35 Gew.-%, vorzugsweise 10 bis 20 Gew. % beträgt.

5. Verfahren gemäß einem oder mehreren der Ansprüche 1 bis 4, dadurch gekennzeichnet, daß man als Mahlflüssigkeit Wasser und/oder ein vorzugsweise mit Waser mischbares, organisches Lösemittel verwendet.

6. Verfahren gemäß Anspruch 5, dadurch gekennzeichnet, daß die Mahlflüssigkeit eine Lösung von Isobutanol in Wasser ist.

7. Verfahren gemäß einem oder mehreren der Ansprüche 1 bis 5, dadurch gekennzeichnet, daß man als Pigmentdispergator des Typs Q[-Y-X]ₘ (II) Verbindungen entsprechend der Formel III 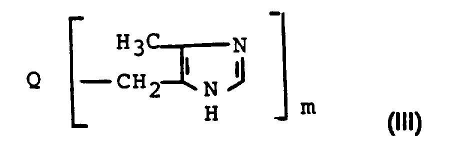 einsetzt, in welcher
Q die in Anspruch 1 ausgewiesene Bedeutung zukommt, sowie
m für einen Zahlenwert von 0,5 bis 4 steht.

8. Verfahren gemäß einem oder mehreren der Ansprüche 1 bis 6, dadurch gekennzeichnet, daß man als Pigmentdispergator des Typs Q[-Y-X]ₘ (II) solche Verbindungen einsetzt, in welchen
Q die in Anspruch 1 ausgewiesene Bedeutung zukommt,
Y die brückenbildende Gruppierung mit der Struktur
-CH₂-NH-CO-CH₂-NH-(CH₂)₂₋₃-
und
X über den Imidstickstoff an das Brückenglied Y gebundenes Imidazolyl oder einen Rest mit der Struktur 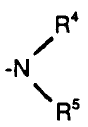 bezeichnet, wobei R⁴ und R⁵ gleiches oder unterschiedliches C₁-C₆-Alkyl darstellen,
sowie
m für einen Zahlenwert von 0,5 bis 4 steht.

9. Verfahren gemäß einem oder mehreren der Ansprüche 1 bis 6, dadurch gekennzeichnet, daß man als Pigmentdispergator des Typs Q[-Y-X]ₘ (II) solche Verbindungen einsetzt, in welchen
Q die in Anspruch 1 ausgewiesene Bedeutung zukommt,
Y die brückenbildende Gruppierung mit der Struktur -SO₂-NH-(CH₂)₂₋₃- und
X über den Imidstickstoff an das Brückenglied Y gebundenes Imidazolyl oder einen Rest mit der Struktur 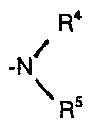 bezeichnet, wobei R⁴ und R⁵ gleiches oder unterschiedliches C₁-C₆-Alkyl darstellen, sowie
m für einen Zahlenwert von 0,5 bis 4 steht.

10. Verfahren gemäß einem oder mehreren der Ansprüche 1 bis 9, dadurch gekennzeichnet, daß man Gemische von strukturell unterschiedlichen Pigmentdispergatoren der Formel II einsetzt.

11. Verfahren gemäß einem oder mehreren der Ansprüche 1 bis 10, dadurch gekennzeichnet, daß man die Pigmentdispergatoren der Formel II in Mengen von 0,1 bis 25 Gew.-%, bezogen auf das Rohpigment mit der Basisstruktur entsprechend Formel I zugibt.

12. Verfahren gemäß Anspruch 11, dadurch gekennzeichnet, daß man pro Gewichtseinheit Rohpigment zwischen 1 und 15 Gew.-%, vorzugsweise 3 bis 10 Gew.-% Dispergator einsetzt.

13. Verfahren gemäß einem oder mehreren der Ansprüche 1 bis 12, dadurch gekennzeichnet, daß man die Naßmahlung bei pH-Werten im alkalischen Bereich durchführt.

14. Verfahren gemäß einem oder mehreren der Ansprüche 1 bis 13, dadurch gekennzeichnet, daß die Verweildauer des Mahlguts zur Feinverteilung in der Rührwerkskugelmühle sich auf 10 bis 60 Minuten beläuft.

15. Verfahren gemäß Anspruch 14, dadurch gekennzeichnet, daß die Verweildauer des Mahlguts in der Mühle zwischen 10 und 45 Minuten, vorzugsweise bei 10 bis 30 Minuten liegt.

16. Verfahren gemäß einem oder mehreren der Ansprüche 1 bis 15, dadurch gekennzeichnet, daß man als organisches Lösemittel für die Finishbehandlung Alkanole, vorzugsweise Isobutanol, verwendet.

17. Verfahren gemäß einem oder mehreren der Ansprüche 1 bis 16, dadurch gekennzeichnet, daß man die Lösemittelfinish-Behandlung bei pH-Werten im sauren Bereich durchführt.

18. Verfahren gemäß einem oder mehreren der Ansprüche 1 bis 17, dadurch gekennzeichnet, daß man die fertiggestellte Pigmentzubereitung aus schwach alkalischer Suspension isoliert.

19. Pigmentzubereitungen, erhältlich nach einem Verfahren gemäß einem oder mehreren der Ansprüche 1 bis 18.

20. Verwendung von Pigmentzubereitungen gemäß Anspruch 19 als Farbmittel zum Pigmentieren von Lacken, Druckfarben und Kunststoffen.

## Claims

1. A process for the preparation of pigment preparations based on C.I. Pigment Violet 23 (No. 51 319) of the formula I 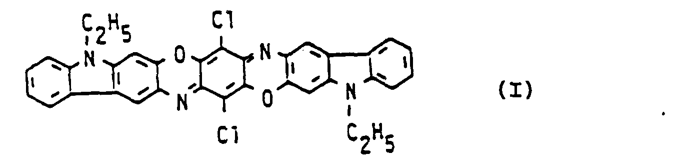 which comprises wet milling the coarsely crystalline crude pigments of the above dioxazine compound in the presence of pigment dispersants of the formula II
Q[- Y - X]ₘ (II)
in which
Q is an m-valent radical of the base structure in accordance with formula I,
Y is a bridge-forming grouping selected from the group consisting of -CH₂-, -CHR¹-, -CR¹R²-, phenylene, -CO-, -SO₂- or -NR³-, or multiply repeating alkylene or a possibly repeating combination of such bridging members of different types in which R¹ and R² are identical or different C₁-C₄-alkyl and R³ is hydrogen or C₁-C₄-alkyl,
X is the radical of an aliphatic or aromatic, five- or six-membered heterocyclic system bound to bridging member Y via a carbon atom with in each case 1 to 3 identical or different ring hetero atoms selected from the group consisting of nitrogen, oxygen or sulfur, which, if desired, may additionally have a benzo-fused ring and be substituted by C₁-C₄-alkyl, C₂-C₄-alkenyl, C₁-C₃-hydroxyalkyl or phenyl,
or is a phthalimido radical bound to bridging member Y via the imide nitrogen, which may be substituted on the benzenoid ring by chlorine, bromine, nitro, carboxyl, N-(C₁-C₅-alkyl)-carbamoyl, N-phenylcarbamoyl or benzoylamino,
or is a radical having the structure 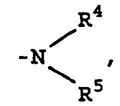 in which R⁴ and R⁵ each individually and independently of one another are each hydrogen, substituted or unsubstituted C₁-C₂₀-alkyl or C₂-C₂₀-alkenyl, C₅-C₆-cycloalkyl, substituted or unsubstituted phenyl, benzyl or naphthyl,
or in which R⁴ and R⁵ jointly or together with the adjacent N atom form an aliphatic or aromatic, five-or six-membered heterocyclic system with in each case 1 to 3 identical or different ring hetero atoms selected from the group consisting of nitrogen, oxygen or sulfur, and
m is a numerical value between 0.1 and 4,
wherein in the case of the multiple presence (m > 1) of components X and Y in the dispersants of the formula II the meaning of the symbols just mentioned does not have to be identical,
whose addition can take place at any time during the course of the below-defined combination of the two treatment operations of comminution and finishing (with the exception of other processing stages),
first in an inert liquid medium in a stirred ball mill, which is operated at a power density of > 2.5 kW per liter of milling space and a peripheral speed of the stirrer of > 12 m/s, under the action of grinding media having a diameter of ≤ 1 mm, until the X-ray index as a measure of the crystallinity of the resulting pigment particles is ≤ 9,
then subjecting this prepigment composition in the form of the as-obtained mill base suspension or, in the case of an intermediate isolation after previous re-takeup in an inert organic or inorganic liquid, to a solvent finishing treatment at elevated temperature and then isolating the finished pigment preparation in the usual manner.

2. The process as claimed in claim 1, wherein grinding media of diameter 0.2 to 1.0 mm, preferably 0.3 to 0.5 mm, are used.

3. The process as claimed in claim 1 or 2, wherein the pigment concentration in the mill base is ≤ 40% by weight.

4. The process as claimed in claim 3, wherein the pigment concentration in the mill base is 10 to 35% by weight, preferably 10 to 20% by weight.

5. The process as claimed in one or more of claims 1 to 4, wherein the milling liquid used is water and/or a preferably water-miscible organic solvent.

6. The process as claimed in claim 5, wherein the milling liquid is a solution of isobutanol in water.

7. The process as claimed in one or more of claims 1 to 5, wherein the pigment dispersant of the Q[-Y-X]ₘ (II) type used is a compound of the formula III 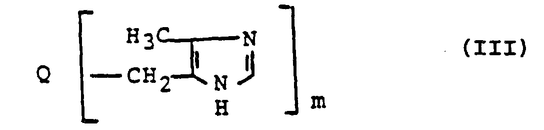 in which
Q has the meaning given in claim 1 and
m is a numerical value from 0.5 to 4.

8. The process as claimed in one or more of claims 1 to 6, wherein the pigment dispersant of the Q[-Y-X]ₘ (II) type used is a compound in which
Q has the meaning given in claim 1,
Y is the bridge-forming grouping having the structure -CH₂-NH-CO-CH₂-NH-(CH₂)₂₋₃- and
X is imidazolyl bound to the bridging member Y via the imide nitrogen or a radical having the structure 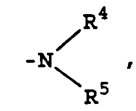 in which R⁴ and R⁵ are identical or different C₁-C₆-alkyl,
and
m is a numerical value from 0.5 to 4.

9. The process as claimed in one or more of claims 1 to 6, wherein the pigment dispersant of the Q[-Y-X]ₘ (II) type used is a compound in which
Q has the meaning given in claim 1,
Y is the bridge-forming grouping having the structure -SO₂-NH-(CH₂)₂₋₃- and
X is imidazolyl bound to the bridging member Y via the imide nitrogen or a radical having the structure 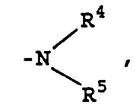 in which R⁴ and R⁵ are identical or different C₁-C₆-alkyl, and
m is a numerical value from 0.5 to 4.

10. The process as claimed in one or more of claims 1 to 9, wherein mixtures of pigment dispersants of the formula II of different structures are used.

11. The process as claimed in one or more of claims 1 to 10, wherein the pigment dispersants of the formula II are added in amounts of 0.1 to 25% by weight, relative to the crude pigment having the base structure of formula I.

12. The process as claimed in claim 11, wherein between 1 and 15% by weight, preferably 3 to 10% by weight, of dispersant are used per weight unit of crude pigment.

13. The process as claimed in one or more of claims 1 to 12, wherein wet milling is carried out at pH values in the alkaline region.

14. The process as claimed in one or more of claims 1 to 13, wherein the residence time of the mill base for comminution in the stirred ball mill amounts to 10 to 60 minutes.

15. The process as claimed in claim 14, wherein the residence time of the mill base in the mill is between 10 and 45 minutes, preferably 10 to 30 minutes.

16. The process as claimed in one or more of claims 1 to 15, wherein alkanols, preferably isobutanol, are used as the organic solvent for the finishing treatment.

17. The process as claimed in one or more of claims 1 to 16, wherein the solvent finishing treatment is carried out at pH values in the acidic range.

18. The process as claimed in one or more of claims 1 to 17, wherein the finished pigment preparation is isolated from a weakly alkaline suspension.

19. A pigment preparation obtainable by a process as claimed in one or more of claims 1 to 18.

20. Use of a pigment preparation as claimed in claim 19 as colorant for pigmenting paints, printing inks and plastics.

## Revendications

1. Procédé pour la préparation de préparations pigmentaires à base du C.I. Pigment Violet 23 (n° 51 319) de formule I 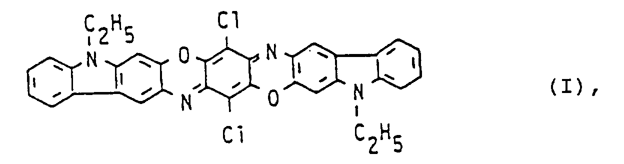 caractérisé en ce que les pigments bruts présents en état de cristaux grossiers du composé de dioxazine ci-dessus
en présence de dispersants de pigments de formule générale II
Q[-Y-X]ₘ (II)
dans laquelle
Q représente un radical m-valent de la structure de base correspondant à la formule I,
Y est un groupement formant des ponts de la série -CH₂-, -CHR¹-, -CR¹R²-, phénylène, -CO-, -SO₂- ou -NR³⁻, ou alkylène se succédant plusieurs fois ou une combinaison éventuellement répétitive de tels éléments de pont de types différents, dans lesquelles R¹ et R² représentent alkyles en C₁-C₄, identiques ou différents, et R³ représente l'hydrogène ou alkyle en C₁-C₄,
X représente le radical d'un système hétérocyclique à 5 ou 6 chaînons, aliphatique ou aromatique, lié par l'intermédiaire d'un atome de carbone à l'élément de pont Y, comportant chaque fois avec 1 à 3 hétéroatomes, appartenant au cycle, identiques ou différents de la série de l'azote, de l'oxygène ou du soufre, lequel présente encore éventuellement un cycle de benzène condensé et qui peut être substitué par alkyle en C₁-C₄, alcényle en C₂-C₄, hydroxyalkyle en C₁-C₃ ou phényle,
ou représente un radical phtalimido lié par l'intermédiaire de l'azote imido à l'élément de pont Y, qui peut être substitué sur le cycle de benzène par le chlore, le brome, nitro, carboxy, N-(alkyl en C₁-C₅)-carbamoyle, n-phénylcarbamoyle ou benzoylamino,
ou représente un radical répondant à la structure 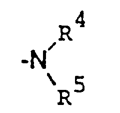 dans laquelle R⁴ et R⁵, chacun en soi ainsi qu'indépendamment l'un de l'autre, représentent chaque fois l'hydrogène, cycloalkyle en C₅-C₆, alcényle en C₂-C₂₀ ou alkyle en C₁-C₂₀ éventuellement substitué, naphtyle, benzyle ou phényle éventuellement substitué,
ou dans laquelle R⁴ et R⁵, ensemble, ainsi qu'ensemble avec l'atome de N limitrophe forment un système hétérocyclique aliphatique ou aromatique à 5 ou 6 chaînons, avec chaque fois 1 à 3 hétéroatomes appartenant au cycle, identiques ou différents, de la série de l'azote, de l'oxygène ou du soufre, et
m est un nombre compris entre 0,1 et 4,
dans le cas de la présence multiple (m > 1) des constituants X et Y dans les dispersants de formule II, la signification des symboles précités n'est pas obligatoirement identique,
dont l'addition peut être effectuée à n'importe quel moment au cours de la combinaison définie plus en détail ci-après des deux modes de traitement de division fine et de finition (à l'exception d'autres étapes de procédé),
on soumet, d'abord dans un milieu liquide inerte dans un broyeur-agitateur à boulets que l'on exploite avec une densité de puissance de > 2,5 kW/litre de compartiment de broyage et une vitesse périphérique de l'agitateur > 12 m/s sous l'effet des corps broyants d'un diamètre ≤ 1 mm, à un broyage humide jusqu'à ce que l'indice des rayons X en tant que mesure de cristallinité des particules de pigments obtenues soit ≤ 9,
cette composition de prépigments sous forme de la suspension de la matière broyée ainsi obtenue, ou dans le cas d'un isolement intermédiaire après une reprise préalable dans un liquide inerte, respectivement organique, puis à un traitement au solvant à température élevée et ensuite on isole de façon connue la préparation pigmentaire finie.

2. Procédé selon la revendication 1, caractérisé en ce que l'on utilise des corps broyants d'un diamètre de 0,2 à 1,0 mm, de préférence de 0,3 à 0,5 mm.

3. Procédé selon la revendication 1 ou 2, caractérisé en ce que la concentration en pigments dans la matière broyée est de ≤ 40 % en poids.

4. Procédé selon la revendication 3, caractérisé en ce que la concentration en pigments dans la matière broyée est de 10 à 35 % en poids, de préférence de 10 à 20 % en poids.

5. Procédé selon une ou plusieurs des revendications 1 à 4, caractérisé en ce que l'on utilise en tant que liquide de broyage l'eau et/ou un solvant organique de préférence miscible à l'eau.

6. Procédé selon la revendication 5, caractérisé en ce que le liquide de broyage est une solution d'isobutanol dans l'eau.

7. Procédé selon une ou plusieurs des revendications 1 à 5, caractérisé en ce que l'on utilise en tant que dispersants de pigments de type Q[-Y-X]ₘ (II) des composés répondant à la formule III 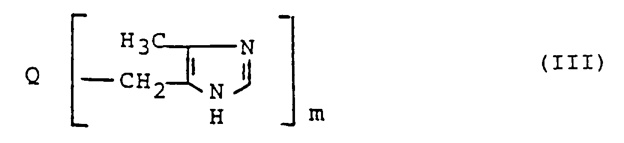 dans laquelle
Q a la signification donnée ci-dessus, et
m est un nombre compris entre 0,5 et 4.

8. Procédé selon une ou plusieurs des revendications 1 à 6, caractérisé en ce que l'on utilise en tant que dispersants de pigments de type Q[-Y-X]ₘ (II) des composés dans lesquels
Q a la signification donnée dans la revendication 1,
Y est un groupement formant des ponts ayant la structure -CH₂-NH-CO-CH₂-NH-(CH₂)₂₋₃, et
X est imidazolyle lié au groupement de pont Y par l'intermédiaire de l'azote d'imide ou un radical répondant à la structure 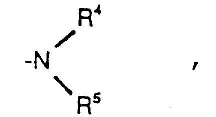 où R⁴ et R⁵ représentent alkyles en C₁-C₆, identiques ou différents, ainsi que
m est un nombre de 0,5 à 4.

9. Procédé selon une ou plusieurs des revendications 1 à 6, caractérisé en ce que l'on utilise en tant que dispersant de pigments de type Q[-Y-X]ₘ (II) des composés dans lesquels
Q a la signification donnée dans la revendication 1,
Y est un groupement formant des ponts ayant la structure -SO₂-NH-(CH₂)₂₋₃-, et
X est l'imidazolyle lié au groupement de pont Y par l'intermédiaire de l'azote d'imide ou un radical répondant à la structure 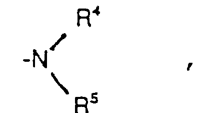 où R⁴ et R⁵ représentent alkyle en C₁-C₆ identique ou différent, ainsi que
m est un nombre de 0,5 à 4.

10. Procédé selon une ou plusieurs des revendications 1 à 9, caractérisé en ce que l'on utilise des mélanges de dispersants de pigments ayant des structures différentes de formule II.

11. Procédé selon une ou plusieurs des revendications 1 à 10, caractérisé en ce que l'on utilise les dispersants de pigments de formule II dans des quantités de 0,1 à 25 % en poids par rapport aux pigments bruts ayant la structure de base répondant à la formule I.

12. Procédé selon la revendication 11, caractérisé en ce que l'on utilise le dispersant de pigments dans une quantité comprise entre 1 et 15 % en poids, de préférence de 3 à 10 % en poids par unité de poids de pigment brut.

13. Procédé selon une ou plusieurs des revendications 1 à 12, caractérisé en ce que l'on met en oeuvre le broyage humide à des valeurs de pH dans le domaine alcalin.

14. Procédé selon une ou plusieurs des revendications 1 à 13, caractérisé en ce que la durée de séjour de la matière broyée pour la division fine dans le broyeur agitateur à 0 est de 10 à 60 minutes.

15. Procédé selon la revendication 14, caractérisé en ce que la durée de séjour de la matière broyée dans le broyeur est comprise entre 10 et 45 minutes, de préférence de 10 à 30 minutes.

16. Procédé selon une ou plusieurs des revendications 1 à 15, caractérisé en ce que l'on utilise en tant que solvants organiques pour le traitement de finition des alcanols, de préférence l'isobutanol.

17. Procédé selon une ou plusieurs des revendications 1 à 16, caractérisé en ce que l'on met en oeuvre la finition au solvant dans le domaine des valeurs de pH acide.

18. Procédé selon une ou plusieurs des revendications 1 à 17, caractérisé en ce que l'on isole la préparation pigmentaire finie à partir d'une suspension faiblement alcaline.

19. Préparations pigmentaires que l'on obtient selon un procédé selon une ou plusieurs des revendications 1 à 18.

20. Utilisation de préparations pigmentaires selon la revendication 19, en tant que colorants pour la pigmentation de vernis, d'encres d'imprimerie et de matières plastiques.
